# EUROPÄISCHE PATENTSCHRIFT

(11) **EP 4 559 570 B1**
(45) Veröffentlichungstag und Bekanntmachung des Hinweises auf die Patenterteilung: **12.11.2025**
(21) Anmeldenummer: 24202167.3
(22) Anmeldetag: 24.09.2024
(51) Int. Cl.: B01F 31/20, B01F 31/23, B01F 35/92, B01L 7/02, G01N 35/00, B01F 35/90

(54) **PROBENAUFBEREITUNGSEINRICHTUNG MIT EINEM WASSERBAD**
SAMPLE PREPARATION DEVICE WITH A WATER BATH
DISPOSITIF DE PRÉPARATION DES ÉCHANTILLONS AVEC UN BAIN D'EAU

(30) Priorität: 27.11.2023 DE 102023133089
(43) Veröffentlichungstag der Anmeldung: 28.05.2025
(73) Patentinhaber: Alfred-Wegener-Institut Helmholtz-Zentrum für Polar- und Meeresforschung, 27570 Bremerhaven (DE)
(72) Erfinder: Marent, Andreas, 10963 Berlin (DE)

(56) Entgegenhaltungen:
- CN-A- 108 905 821
- CN-A- 111 569 739
- CN-A- 114 632 448
- CN-U- 216 172 457
- JP-A- 2012 173 251
- US-A- 4 921 676
- US-A- 5 520 884

## Beschreibung

Die Erfindung bezieht sich auf eine Probenaufbereitungseinrichtung mit einem Wasserbad, aufweisend eine Wanne und einen darin befindlichen Einsatzkorb, wobei in die Wanne Wasser einbringbar und temperierbar ist, mit einer Schüttelvorrichtung, die mit der Wanne oder dem Einsatzkorb verbunden ist, und mit einer Probenvorrichtung mit mehreren austauschbaren Probengefäßen, die in das Wasser in der Wanne eintauchbar sind, wobei die Probenvorrichtung ebenfalls schüttelbar ausgebildet ist.

Probenaufbereitungseinrichtungen werden für verschiedene wissenschaftliche Messungen benötigt, bei denen spezielle Messinstrumente zum Einsatz kommen. Bei einer Isotopenmessung werden die Anteile der verschiedenen Isotope eines chemischen Elements in gasförmigen Proben mit Hilfe eines Massenspektrometers bestimmt (statische Gasmassenspektrometrie, vergleiche DE 10 2017 005 345 A1**).** Als Beispiel wird im Folgenden die Probenaufbereitung für die Isotopenmessung von Wasserstoff und Sauerstoff beschrieben. Die Messproben werden erzeugt, indem die Probengefäße mit Probenwasser und H₂- oder CO₂-Gas gefüllt (es entsteht die Probe) und so lange geschüttelt werden, bis sich ein isotopisches Gleichgewicht (Equilibrium) zwischen den Molekülen im Gas und den Molekülen des Probenwassers eingestellt hat (Equilibration). Auf Grund der Temperaturabhängigkeit dieses Prozesses ist eine konstante Temperierung des Wassers für die Einstellung des isotopischen Gleichgewichts unabdingbar. Das Schütteln der Proben durchmischt das Probenwasser laufend, wodurch das Erreichen des isotopischen Gleichgewichts deutlich beschleunigt wird. Bei der anschließenden Messung des Probengases werden dessen Isotope im Massenspektrometer je nach Masse und Ladung unterschiedlich stark von ihrer Flugbahn abgelenkt und können getrennt detektiert und quantitativ erfasst werden. Die Isotope der leichteren Elemente (vor allem Kohlenstoff, Sauerstoff, Stickstoff, Schwefel und Wasserstoff) dienen beispielsweise als Nachweis für die Umweltbedingungen, die bei der Schalenbildung von Muscheln oder Foraminiferen im Ozean geherrscht haben.

### Stand der Technik

Der der Erfindung am nächsten kommende Stand der Technik ist aus der CN 108905821 A bekannt, in der die gattungsgemäße Probenaufbereitungseinrichtung offenbart ist. Bei dieser wird ein Einsatzkorb mittels einer Schüttelvorrichtung geschüttelt, die direkt mit einer Seitenwand des Einsatzkorbes fest verbunden ist. In dem Einsatzkorb stehen im Einsatzfall die Probengefäße, deren Inhalt durch das Schütteln des Einsatzkorbes ebenfalls geschüttelt wird. Die Schüttelbewegung ist eine axiale Pendelbewegung. Durch die Relativbewegung zwischen dem Wasser in den Wanne und den eingetauchten Probengefäßen wird gleichzeitig eine Verwirbelung des Wassers erreicht, die zu einer gleichmäßigen konstanten Temperierung des Wassers beiträgt. Die komplette Probenvorrichtung wird in den Einsatzkorb gestellt und mit diesem zusammen geschüttelt. Bei einer besonders schweren Probenvorrichtung muss durch die Schüttelvorrichtung eine entsprechend große Kraft auf die Seitenwand des Einsatzkorbes ausgeübt werden, was zu dessen Verformung führen kann. Bei dieser Art Wasserbad mit Schüttelvorrichtung wird das Wasser an sich nicht bewegt. Es wird vielmehr der in das Wasser abgesenkte Einsatzkorb bewegt, in dem die Probengefäße stehen. Dadurch entsteht eine Relativbewegung zwischen beiden.

Ähnliche Probenaufbereitungseinrichtungen, bei denen der Einsatzkorb geschüttelt wird, sind aus der DE 37 27 010 C2 und der US 5 520 884 A bekannt. Auch bei diesen werden nur die Probengefäße und nicht das Wasser geschüttelt. Bei der DE 37 27 010 C2 ist dazu ein waagenähnliches Einsatzgestell vorgesehen, auf dem die Proben abgestellt werden. Die Schütteleinrichtung greift in der Mitte des Einsatzgestells an und erzeugt eine radiale Pendelbewegung. In der US 5 520 884 A ist der Einsatzkorb als variables Modul ausgebildet und mit der Schütteleinrichtung verbunden. Durch den modularen Aufbau kann die Schütteleinrichtung für verschiedene Wasserbäder genutzt werden. Nachteilig ist wiederum, dass die gesamte Probenvorrichtung von der Schütteleinrichtung geschüttelt werden muss. Die gleichmäßige Temperierung des Wasser wird wiederum durch die Relativbewegung zwischen dem unbewegten Wasser und den bewegten Probengefäßen erzeugt.

Nach diesem Prinzip arbeiten auch die derzeit auf dem Markt angebotene Wasserbäder, vergleiche beispielsweise den **Prospekt** "Wasserbäder" der Firma Memmert (Best. Nr. D10202, Stand 2107 d)(abgerufen im Internet unter der URL https://www.memmert.com/fileadmin/products/documents/categories/BR_Memmert_Wasserbaeder_DE.pdf, Stand 17.08.2023). Diese modernen Geräte sind modular aufgebaut und können optional um eine Schüttelvorrichtung (vergleiche Seite 9 ebenda) erweitert werden. Diese besteht im Wesentlichen aus einem Antrieb, der an die Schmalseite eines Rahmens angreift. In den Rahmen wird der Einsatzkorb eingehängt und dann über die Wanne geschwenkt. Da der Rahmen geschüttelt wird, darf er sich am Gehäuse des Wasserbades nicht abstützen. Das Gewicht der eingestellten Probengefäße einschließlich ggfs. der gesamten Probenvorrichtung darf nicht zu groß sein, damit sich der Rahmen nicht verkantet.

Zur Durchmischung des Wasser ist es neben der Bewegung des Einsatzkorbes zur Erzeugung einer Relativbewegung zwischen den Probengefäßen und dem Wasser beispielsweise aus der WO 97/11773 A1 auch bekannt, direkt die Wanne mit dem Wasser zu schütteln. Dazu werden eine oder mehrere Wannen auf einen Schütteltisch gestellt. Der Einsatzkorb mit den Probengefäßen steht auf dem Boden der Wanne. Alle werden über die Wanne mitgeschüttelt. Dadurch werden sowohl das Wasser in der Wanne als auch die Proben in den Probengefäßen geschüttelt. Die Schüttelvorrichtung muss allerdings das gesamte Gewicht von Wanne, Einsatzkorb und Probengefäßen bzw. gesamter Probenvorrichtung mitschütteln.

Ferner ist aus **der** EP 2 989 953 B1 eine Probenvorrichtung bekannt, die durch Verstellen von Stützfüßen in ein Wasserbad abgesenkt werden kann. Vor dem Absenken (und analog nach dem Herausheben) wird die Probenvorrichtung über die Stützfüße auf dem Gehäuse des Wasserbades abgestellt. Weiterhin ist aus der **Veröffentlichung** "MICRO PCO2, Equilibration Unit" von J.F. Stevens et al. (The Lancet - New Inventions, Volume 284, ISSUE 7357, P447-448, August 29, 1964, https://doi.org/10.1016/S0140-6736(64)90336-8, abgerufen unter der URL https://www.sciencedirect.com/science/article/pii/S0140673664903368?via%3Dihub, Stand 17.08.2023) eine kompakte Equilibriereinheit bekannt, bei der die Probenvorrichtung mit einer Schüttelvorrichtung verbunden und gemeinsam auf einem Wasserbadschlitten in einer Wanne eines Wasserbades angeordnet ist. Die Probenvorrichtung ist besonders klein. Die Equilibriereinheit wird für Blutuntersuchungen eingesetzt.

Aus der DE 1 906 734 A ist ein chemisches Analysiergerät mit einer zentralen Hubvorrichtung bekannt, bei der unten an einem Führungsrohr eine Drehscheibe befestigt ist, in der entnehmbare Probengefäße kreisförmig angeordnet und in eine temperierbare Wanne eingetaucht sind. Über einen Hubkolben und einen Hubzylinder kann ein Gestell mit Injektionsspritzen angehoben und abgesenkt werden. Nach dem Anheben wird die Drehscheibe um einen vorbestimmten Winkel gedreht und anschließend werden nach dem Absenken über die Injektionsspritzen neue Probengefäße gefüllt. Die Vorrichtung dient der verbesserten Befüll- und Entleerbarkeit der Probengefäße, wobei die Flüssigkeit nur beim Einfüllen relevant durchmischt wird. Aus der US 2021/0 000 144 A1 ist eine Aufbereitungsvorrichtung mit einem horizontal wirkenden Aktuatorzylinder bekannt, die eine so gestaltete Klemmvorrichtung umfasst, dass sie selektiv eine erste Klemmkraft auf ein erstes Ende eines Probenträgers und eine zweite entgegengesetzte Klemmkraft auf ein zweites Ende des Probenträgers ausübt. Weiterhin ist eine hin- und hergehende Vorrichtung vorgesehen, die lineare Kräfte auf den Probenträger ausübt, um diesen entlang des Probengefäßes horizontal hin- und herzubewegen. Aufgabe ist es, diese Pendelbewegung zur Aufbereitung des Inhalts der Probengefäße zu optimieren. Aus der DE 101 58 645 C2 schließlich sind Verwirbelungselemente für ein wannenförmiges Inkubationsgefäß bekannt.

Moderne Probenvorrichtungen (Equilibriereinheiten) können ca. 15 kg und mehr wiegen und sind entsprechend schwer zu handhaben. Sie umfassen einen Ventilblock mit einer Vielzahl (beispielsweise 27) pneumatischer Ventile, an die über Kapillaren die Probengefäße mit den Wasserproben angeschlossen sind. Das hohe Gewicht belastet die Schüttelvorrichtung erheblich, so dass neben einer unangenehmen Geräuschbildung auch Abnutzungen an den Lagerungen und Antrieben auftreten können, die zu einem Ausfall der Schüttelvorrichtung führen können. Alle Anschlussleitungen mit der Probenvorrichtung werden ebenfalls bewegt, was zu Ermüdungserscheinungen und Bruch führen kann. Um die Probengefäße in der Probenvorrichtung auszutauschen, muss die gesamte Probenvorrichtung aus dem Wasserbadbehälter, der in der Regel auf einem Labortisch steht, herausgehoben und wieder eingestellt werden.

### Aufgabenstellung

Ausgehend von der eingangs beschriebenen gattungsbildenden Probenaufbereitungseinrichtung liegt der vorliegenden Erfindung die **Aufgabe** zugrunde, diese so weiterzubilden, dass unter Beibehaltung der gleichmäßigen konstanten Temperierung des Wasserbades die Schüttelvorrichtung der Wanne oder des Einsatzkorbes entlastet wird, wobei der Inhalt der Probengefäße in der Probenvorrichtung weiterhin gut durchmischt werden soll. Weiterhin sollen der Komfort bei der Handhabung der Probenvorrichtung erhöht und Ermüdungserscheinungen und Geräuschentwicklung in der Probenaufbereitungseinrichtung vermieden werden. Die erfindungsgemäße **Lösung** dieser Aufgabe ist dem Haupanspruch zu entnehmen. Vorteilhafte Weiterbildungen der erfindungsgemäßen Probenaufbereitungseinrichtung sind den Unteransprüchen zu entnehmen.

Zur Lösung der Aufgabe wird erfindungsgemäß vorgeschlagen, dass eine erste Hubvorrichtung, die zwei zueinander beabstandete Hubzylinder mit darin geführten Hubkolben aufweist, wobei die Hubzylinder mit dem Gehäuse des Wasserbades und die Hubkolben mit der Probenvorrichtung verbunden sind, und eine zweite Hubvorrichtung, die zwei Hubelemente aufweist, wobei diese zwischen den Hubkolben und der Probenvorrichtung angeordnet sind, vorgesehen sind; dass eine Steuervorrichtung vorgesehen ist, mittels der die beiden Hubkolben gleichzeitig und die beiden Hubelemente alternierend betätigbar sind; und dass im Einsatzkorb Verwirbelungselemente für das Wasser vorgesehen sind.

Bei der erfindungsgemäßen Probenaufbereitungseinrichtung sind neben der Schüttelvorrichtung für die Wanne oder den Einsatzkorb noch zwei Hubvorrichtungen vorgesehen, die nicht mit der Wanne oder dem Einsatzkorb verbunden sind. Sie belasten deren Schüttelvorrichtung also nicht. Die beiden Hubvorrichtungen sind ausschließlich mit der Probenvorrichtung verbunden und bewegen nur diese.

Dabei wird mit der ersten Hubvorrichtung eine vertikale Aufwärtsbewegung (Ausfahren der Hubkolben aus den Hubzylindern) oder Abwärtsbewegung (Einfahren der Hubkolben in die Hubzylinder) der Probenvorrichtung und mit der zweiten Hubvorrichtung eine seitliche Kippbewegung (Pendelbewegung, Schüttelbewegung, abwechselndes Abheben und Absenken) der Probenvorrichtung erzeugt. Wenn die Probenvorrichtung ausgefahren ist, befinden sich die Probengefäße oberhalb des Wasserbads (ausgefahrene Hubkolben) und können einfach ausgetauscht werden (optional kann die gesamte Probenvorrichtung entnommen werden). Wenn die Probenvorrichtung eingefahren ist (eingefahrene Hubkolben), befinden sich die Probengefäße im Wasser des Wasserbads und die Kippbewegung zur Durchmischung der Proben in den Probengefäßen kann durchgeführt werden. Bei der ersten Hubvorrichtung sind die Hubzylinder mit dem Gehäuse des Wasserbads und die Hubkolben mit der Probenvorrichtung verbunden. Die Hubzylinder sind die ortsfesten, die Hubkolben die ortsveränderlichen Komponenten der vertikalen Hubvorrichtung, wobei die Hubkolben in den Hubzylindern geführt sind und vertikal in diesen auf und ab bewegt werden können. Entsprechend kann die gesamte Probenvorrichtung mittels der beiden Hubkolben vertikal auf und ab bewegt werden. Die erste Hubvorrichtung kann auf dem Gehäuse eines Wasserbads einfach fest montiert werden. Die Schütteleinrichtung für die Wanne oder den Einsatzkorb wird nicht belastet und muss nicht die gesamte Probenvorrichtung schütteln. Die beiden Hubzylinder der ersten Hubvorrichtung liegen beabstandet einander gegenüber, beispielsweise an den beiden Schmalseiten eines rechteckigen Wasserbads. Zwischen den beiden Hubkolben ist die Probenvorrichtung angeordnet. Sie ist beispielsweise einhängbar ausgebildet und somit einfach in die erste Hubvorrichtung einsetzbar und auch wieder aus dieser entnehmbar. Das gesamte Gewicht der Probenvorrichtung wird über die erste Hubvorrichtung in das Gehäuse des Wasserbads abgeleitet.

Die zweite Hubvorrichtung für die seitliche Kippbewegung der Probenvorrichtung weist zwei beabstandete Hubelemente auf, die zwischen den Hubkolben der ersten Hubvorrichtung und der Probenvorrichtung angeordnet sind. Der direkte Einsatz der Hubzylinder der ersten Hubvorrichtung zur Erzeugung der Kippbewegung wäre zwar auch möglich, aber ineffektiv. Die beiden Hubelemente werden mittels einer Steuervorrichtung gegensinnig ausgelenkt und wieder rückgestellt und erzeugen dadurch eine zyklische Kippung (oder auch Schaukel- oder Pendelbewegung) der Probenvorrichtung um ihren Schwerpunkt, der in der Mitte zwischen den beiden Hubzylindern der ersten Hubvorrichtung liegt. Das Verkippen führt zu einem Schütteln des Inhalts der Probengefäße zur Beschleunigung der Equilibration. Es erfolgt mit einer relativ hohen Frequenz bei einem relativ geringen Hub, wobei durch die Einstellung der Frequenz der Grad der Durchmischung eingestellt werden kann. Die Steuervorrichtung weist für die Vertikalbewegung und die Kippbewegung unterschiedliche Steuerwege auf. Die Bewegungen können unabhängig voneinander erzeugt werden. Dies kann manuell, aber auch halb- oder vollautomatisch erfolgen, sodass die Probenaufbereitungseinrichtung auch autark ohne direkte Aufsicht arbeiten kann. Die Kippbewegung der Probenvorrichtung wird bei eingefahrenen Hubkolben während der gesamten Probenaufbereitung zur Erreichung der Equilibration durchgeführt.

Die vertikale Bewegung der Probenvorrichtung durch die erste Hubvorrichtung dient in erster Linie zum Austausch der Probengefäße in der Probenvorrichtung. Dazu werden die Hubkolben synchron nach oben ausgefahren und die Probengefäße der Probenvorrichtung in einer bequemen Arbeitshaltung ausgetauscht. Danach werden die beiden Hubzylinder synchron nach unten wieder eingefahren, sodass die Probengefäße der Probenvorrichtung in das auf konstanter Temperatur gehaltene Wasser in der Wanne des Wasserbades zumindest im Bereich der enthaltenen Proben vollständig eintauchen. Die vertikale Bewegung der Probenvorrichtung dient aber auch zur Wartung, zum Einhängen oder Ausklinken der Probenvorrichtung. Auf Grund der Temperaturabhängigkeit der Equilibrierung müssen das Wasser in der Wanne der Probenaufbereitungseinrichtung wie auch der Inhalt der Probengefäße der Probenvorrichtung auf konstanter Temperatur gehalten werden. Die Temperaturkonstanz wird deutlich leichter erfüllt, wenn das Wasser in der Wanne der Probenaufbereitungseinrichtung kontinuierlich verwirbelt wird. Durch die Schüttelvorrichtung der Probenaufbereitungseinrichtung wird der Einsatzkorb (direkt oder über die die Wanne) geschüttelt. Der Einsatzkorb weist bei der Erfindung Verwirbelungselemente auf. Durch die Schüttelbewegung des Einsatzkorbes werden die Verwirbelungselemente ebenfalls bewegt und verwirbeln das Wasser herum. Dadurch wird eine gleichmäßige Temperaturverteilung im gesamten Wasserbad erreicht. Die vornehmlich vertikale Kippbewegung der eingetauchten Probengefäße trägt hierzu nur wenig bei.

Theoretisch kann die vertikale Bewegung der Probenvorrichtung über jede geeignete Art Antrieb, auch manuell, erreicht werden. Gemäß einer ersten Modifikation der Erfindung ist vorteilhaft und bevorzugt vorgesehen, dass die Steuervorrichtung pneumatisch angetrieben ist und für die erste Hubvorrichtung ein Steuerventil und für die zweite Hubvorrichtung ein Oszillierventil umfasst. Bei einem pneumatischen Antrieb handelt es sich um einen wartungsarmen Antrieb, der in der Regel in jedem Labor vorhanden und einfach zu handhaben ist und eine gleichmäßige vertikale Hubbewegung garantiert. Die beiden Hubvorrichtungen werden vollständig getrennt voneinander über zwei verschiedenen Ventile pneumatisch angetrieben. Gegebenenfalls kann von der pneumatischen Steuerung auch noch die Schüttelvorrichtung zum Schütteln der Wanne oder des Einsatzkorbes angetrieben werden.

Gemäß einer weiteren vorteilhaften und bevorzugten Modifikation der Erfindung ist vorgesehen, dass an der Probenvorrichtung Portalstützen angeordnet sind, die über die Hubelemente mit den Hubkolben verbunden sind. Dadurch wird es zum einen möglich, dass die erste Hubvorrichtung seitlich von der Probenvorrichtung angeordnet sein kann. Die schwere Probenvorrichtung muss nicht oberhalb der Hubzylinder angeordnet sein. Zum anderen kann so die zweite Hubvorrichtung mit ihren beiden Hubelementen einfach zwischen den Hubkolben der ersten Hubvorrichtung und der Probenvorrichtung angreifen. Diese ist fest mit den Portalstützen verbunden, die Hubelemente sind zwischen diesen und den Hubkolben angeordnet. Dadurch kann die Kippbewegung einfach erzeugt werden. Dies gilt für den eingefahrenen Zustand der Hubkolben, aber auch für den ausgefahrenen (ggfs. zu Kontrollzwecken). Weiterhin können die beiden Portalstützen gleichzeitig als Handgriffe zur Handhabung der Probenvorrichtung, insbesondere zu deren Einhängen in die beiden Hubkolben oder deren Ausklinken daraus, genutzt werden. Es können aber auch zusätzliche Griffe im Bereich der Portalstützen vorgesehen sein.

Weiterhin ist es bevorzugt und vorteilhaft, wenn die beiden Hubelemente der zweiten Hubvorrichtung als pneumatisch betätigbare Spannmodule ausgebildet sind. Diese können gleichzeitig oder abwechselnd wiederholt mittels Druckluft vorgespannt werden, wobei pneumatisch eine Membran ausgelenkt wird. Wenn das Spannelement beispielsweise fest an der Portalstütze angeordnet ist, kann sich die Membran an der Oberseite des Hubkolbens abstützen und dabei die Portalstütze bzw. die Seite der Probenvorrichtung anheben. Eine umgekehrte Anordnung ist ebenfalls möglich. Wenn das Spannelement wieder entlastet wird, entspannt sich die Membran und die angehobene Seite der Probenvorrichtung bzw. die dort angeordnete Portalstütze fällt wieder in die unausgelenkte Ausgangsstellung zurück. Eine Umsetzung der abwechselnden seitlichen Auslenkung der Probenvorrichtung ist mit derartigen pneumatisch betriebenen Spannmodulen konstruktiv einfach umsetzbar. Sie ermöglichen beispielsweise einen Hub in der Größenordnung von 4 mm.

Schließlich ist es bei der Erfindung noch bevorzugt und vorteilhaft, wenn die Probenvorrichtung als Equilibriereinheit für die Isotopenmessung ausgebildet ist. Damit eignet sich die mit der Erfindung beanspruchte Probenaufbereitungsvorrichtung besonders gut für die Kombination mit einem Gasmassenspektrometer für die Isotopenanalyse. Weitere Erläuterungen zu der vorliegenden Erfindung und ihre jeweils angesprochenen Modifikationen können den nachfolgend aufgezeigten Ausführungsbeispielen entnommen werden. Gleiche, jeweils nicht erläuterte und weitere Bezugszeichen sind den jeweils anderen Figuren zu entnehmen.

### Ausführungsbeispiele

Nachfolgend wird die mit der vorliegenden Erfindung beanspruchte Probenaufbereitungseinrichtung und ihre bevorzugten Modifikationen in Ausführungsbeispielen zum besseren Verständnis der Erfindung noch weitergehend erläutert. Dabei zeigt die
- **Fig.** 1: eine perspektivische Ansicht auf die Probenaufbereitungseinrichtung mit ausgefahrener Probenvorrichtung,
- **Fig.** 2: eine perspektivische Ansicht auf die Probenaufbereitungseinrichtung gemäß **Fig.** 1 mit eingefahrener Probenvorrichtung,
- **Fig.** 3: eine perspektivische Ansicht auf die Probenaufbereitungseinrichtung gemäß **Fig.** 1 in erster Kippstellung (rechts ausgefahren, links eingefahren),
- **Fig.** 4: eine perspektivische Ansicht auf die Probenaufbereitungseinrichtung gemäß **Fig.** 1 in zweiter Kippstellung (rechts eingefahren, links ausgefahren),
- **Fig.** 5: ein Detail gemäß **Fig.** 3 (erste Kippstellung: rechts ausgefahren, links eingefahren),
- **Fig.** 6: ein Detail gemäß **Fig.** 4 (zweite Kippstellung: rechts eingefahren, links ausgefahren),
- **Fig.** 7: ein Detail gemäß **Fig.** 4 (links ausgefahren) und
- **Fig.** 8: ein Detail gemäß **Fig.** 1 (im Bereich des Einsatzkorbes).

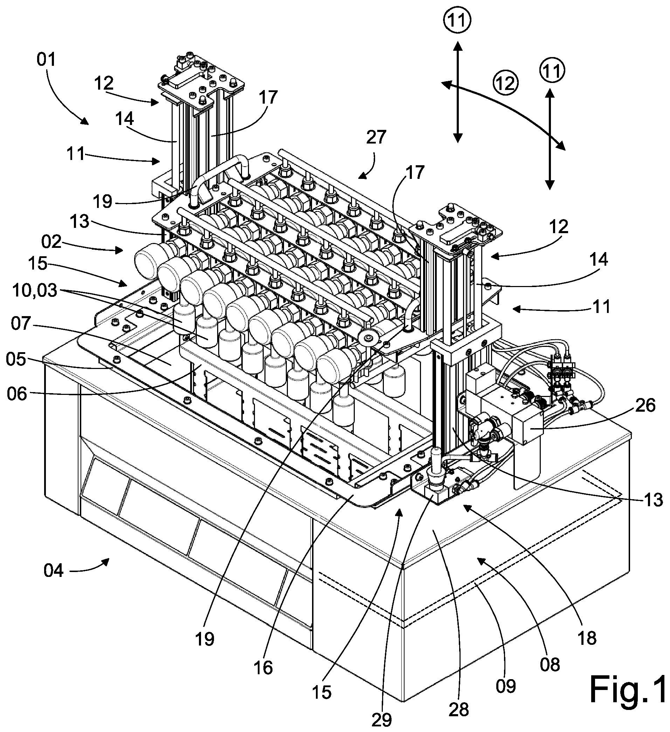

In der **Fig.** 1 ist in der perspektivischen Ansicht eine Probenaufbereitungseinrichtung **01,** beispielsweise als Vorbereitungsinstanz für eine Isotopenanalyse in einem Massenspektrometer, mit einer Probenvorrichtung **27** dargestellt. Im gezeigten Ausführungsbeispiel umfasst die Probenvorrichtung **27** einen Ventilblock **02,** in den austauschbare Probengefäße **03** eingeschraubt sind. Die Probengefäße **03** sind unterhalb des Ventilblocks **02** angeordnet und hängen in der dargestellten Prozessphase (ausgefahrene Probenvorrichtung **27)** oberhalb eines Wasserbads **04.** Das Wasserbad **04** besteht aus einem Gehäuse **28,** einer Wanne **05** und einem darin befindlichen Einsatzkorb **06.** In der Wanne **05** befindet sich im Betriebsfall Wasser **07,** das mittels eines Thermostaten gleichmäßig temperierbar ist. Der Einsatzkorb **06** ist in die Wanne **05** eingehängt und wird im Betriebsfall mittels einer motorisierten Schüttelvorrichtung **08** in Form eines Exzenterantriebs **09** geschüttelt (in der **Fig.** 1 gestrichelt im Inneren des Wasserbads **04** angedeutet). Bei der Schüttelbewegung handelt es sich im gewählten Ausführungsbeispiel um eine alternierende horizontale Bewegung in Längsrichtung des Wasserbads **04.**

Die Probenaufbereitungseinrichtung **01** weist eine erste Hubvorrichtung **11,** mittels der die Probenvorrichtung **27** vertikal verfahrbar ist, und eine zweite Hubvorrichtung **12,** mit der die Probenvorrichtung **27** alternierend seitlich kippbar ist (in der **Fig.** 1 durch Pfeile angedeutet), auf. Zur Umsetzung der vertikalen Verfahrbewegung der Probenvorrichtung **27** weist die erste Hubvorrichtung **11** zwei Hubzylinder **13** und zwei Hubkolben **14** auf. Die beiden Hubzylinder **13** liegen einander an Schmalseiten **15** der Wanne **05** gegenüber und sind fest auf einem Hubtisch **16** montiert, der aber nicht mit der Schütteleinrichtung **08,** sondern mit dem Gehäuse **28** des Wasserbads **04** verbunden ist. Dadurch lastet das Gewicht der Probenvorrichtung **27** nicht auf der Schüttelvorrichtung **08.** Außerdem überträgt sich deren Schüttelbewegung nicht auf die Probenvorrichtung **27** mit deren Schlauchanschlüssen.

Die Probenvorrichtung **27** bzw. der Ventilblock **02** mit den eingeschraubten Probengefäßen **03** ist zwischen den beiden Hubkolben **14** angeordnet. Dazu weist der Ventilblock **02** seitlich zwei Portalstützen **17** auf, an die jeweils das obere Ende der Hubkolben **14** angreift. Die Portalstützen **17** haben in etwa die Höhe der beiden Hubzylinder **13,** sodass ein vollständiges Ein- und Ausfahren der Hubkolben **14** möglich ist. Im gezeigten Ausführungsbeispiel wird die erste Hubvorrichtung **11** pneumatisch über eine entsprechende Steuervorrichtung **18** angetrieben und gesteuert. Diese umfasst einen pneumatischen Anschluss und ein pneumatisches Steuerventil **29** zur Ansteuerung der ersten Hubvorrichtung **11** sowie ein pneumatisches Oszillierventil **26** zur Ansteuerung der zweiten Hubvorrichtung **12** (siehe auch unten). Beide Ventile **26, 29** werden völlig getrennt voneinander angesteuert. Die Probenvorrichtung **27** wird mittels zweier Griffe **19** über die beiden Portalstützen **17** zwischen den beiden Hubkolben **14** aufgehängt. Sie ist somit einfach einsetzbar und wieder entnehmbar.

Die **Fig.** 1 zeigt die Probenvorrichtung **27** mit eingeschraubten, mit Proben **10** gefüllten Probengefäßen **03** im ausgefahrenen Zustand. Beide Hubkolben **14** sind maximal ausgefahren. Im ausgefahren Zustand kann die Probenvorrichtung **27** einfach mit neuen Probengefäßen **03** bestückt werden.

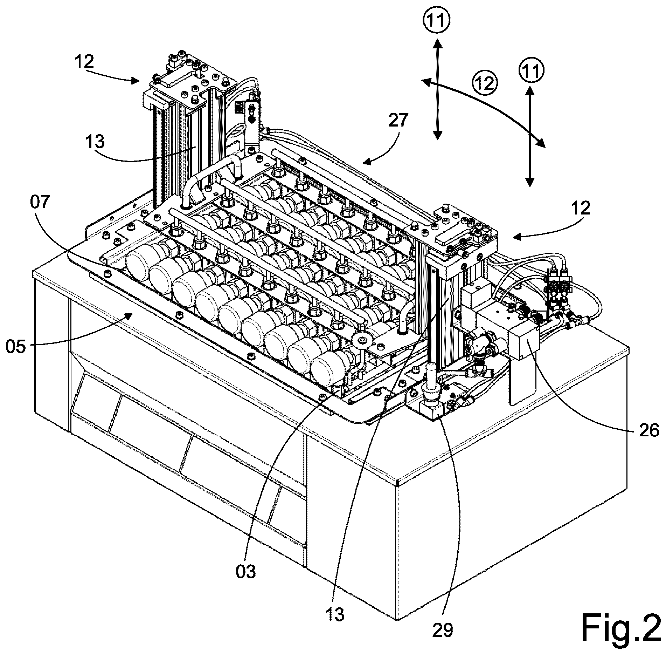

Die **Fig.** 2 zeigt die Probenvorrichtung **27** im eingefahrenen Zustand. Die Hubkolben **14** sind vollständig in die Hubzylinder **13** eingefahren (in der **Fig.** 2 nicht mehr sichtbar). In dieser Stellung sind die mit den Proben **10** gefüllten Probengefäße **03** in das temperierte Wasser **07** in der Wanne **05** eingetaucht und werden entsprechend temperiert.

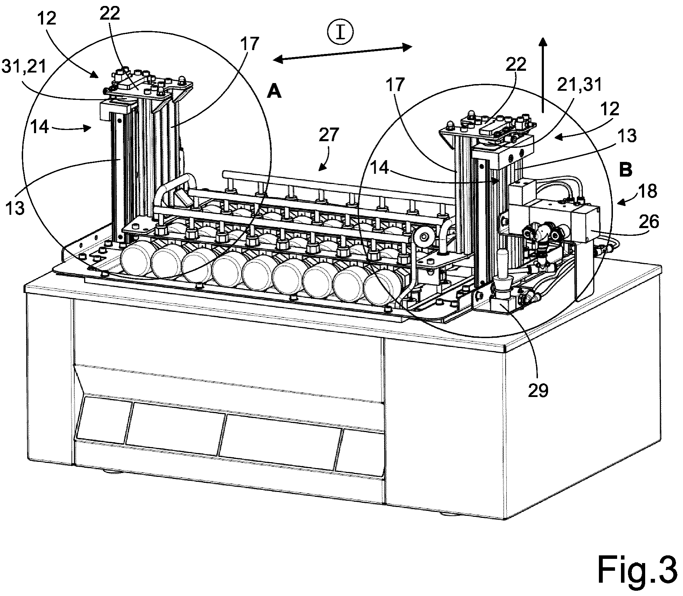

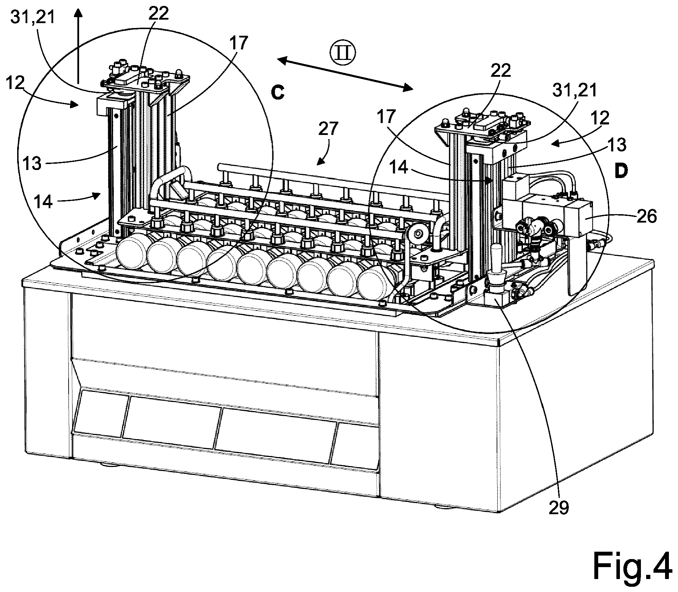

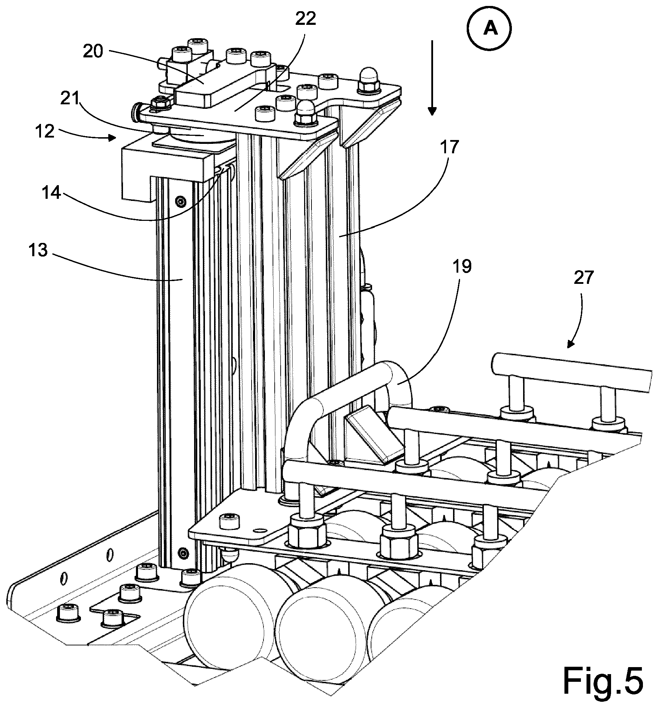

In den **Fig.** 3 und 4 ist die Probenvorrichtung **27** im abgesenkten Zustand gezeigt, in dem die Probengefäße **03** in das Wasser **07** hineinragen. Beide Hubkolben **14** sind in die Hubzylinder **13** vollständig eingefahren. Nunmehr wird die zweite Hubvorrichtung **12** in Betrieb gesetzt, die zwei Hubelemente **31** umfasst. Die Hubelemente **31** befinden sich jeweils an den beiden Seiten der Probenvorrichtung **27** oberhalb der Hubzylinder **13** und sind im dargestellten Ausführungsbeispiel als Spannmodule **21** (rechts und links) ausgebildet. Die **Fig.** 3 zeigt den Ventilblock **02** in einer ersten Kippstellung **I,** in der er nach links gekippt ist (Pfeil). Dazu ist zwischen einer rechten Platte **22** der rechten Portalstütze **17** und dem rechten Hubkolben **14** das rechte Spannmodul **21** im ausgefahrenen Zustand (vergleiche **Fig.** 5 bis 7) angeordnet, durch das die rechte Platte **22** und damit das rechte Ende der Probenvorrichtung **27** leicht (im Bereich einiger mm) angehoben ist (Detail **B).** Eine linke Platte **22** an der linken Portalstütze **17** ist über das linke Spannmodul **21** mit dem linken Hubkolben **14** verbunden. Das linke Spannmodul **21** ist nicht ausgefahren (Detail **A).** Bei einem (beispielhaften) Hub des Spannmoduls **21** von ca. 4 mm ergibt sich eine entsprechende Verkippung der Probenvorrichtung **27** nach links.

Die **Fig.** 4 zeigt die Probenvorrichtung **27** in einer zweiten Kippstellung **II,** in der diese nach rechts gekippt ist (Pfeil). Dazu ist das linke Spannmodul **21** zwischen der linken Platte **22** an der linken Portalstütze **17** und dem linken Hubkolben **14** ausgefahren (vergleiche **Fig.** 5 bis 7) , sodass die linke Platte **22** und damit das linke Ende der Probenvorrichtung **27** leicht (im Bereich einiger mm) angehoben ist (Detail C). Das rechte Spannmodul **21** an der rechten Portalstütze **17** ist nicht ausgefahren (Detail D). Bei einem (beispielhaften) Hub des Spannmoduls **21** von ca. 4 mm ergibt sich eine entsprechende Verkippung der Probenvorrichtung **27** nach rechts. Andere Hubhöhen sind ebenfalls realisierbar.

Durch das abwechselnde Aktivieren des rechten und linken Spannmoduls **21** zwischen den Portalstützen **17** und den Hubkolben **14** durch das pneumatische Oszillierventil **26** ergibt sich eine dynamische Kippbewegung (oder Schaukelbewegung oder Pendelbewegung oder Schüttelbewegung) der Probenvorrichtung **27** zwischen der ersten Kippstellung **I** (Kippung nach links) und der zweiten Kippstellung **II** (Kippung nach rechts). Durch diese dynamische Bewegung der Probenvorrichtung **27** werden die Proben **10** in den Probengefäßen **03** sehr gut geschüttelt, was die Equilibration deutlich beschleunigt. Das pneumatische Oszillierventil **26** wird über die pneumatische Steuervorrichtung **18** angesteuert.

Die **Fig.** 5 zeigt das Detail **A** im Bereich des linken Hubzylinders **13.** Zu erkennen ist ein linker Anschlag **20,** der den Hub des Spannmoduls **21** begrenzt und gleichzeitig als seitliche Führung beim Ausfahren des Hubkolbens **14** dient. Das dargestellte Spannmodul **21** ist zwischen der Platte **22** an der linken Portalstütze **17** und dem linken Hubkolben **14** angeordnet. Im dargestellten Zustand ist das Spannmodul **21** entlastet und die Probenvorrichtung **27** an der linken Seite nicht angehoben. Die Betätigung des Spannmoduls **21** erfolgt im dargestellten Ausführungsfall pneumatisch. Eine elektrische Ansteuerung ist auch möglich.

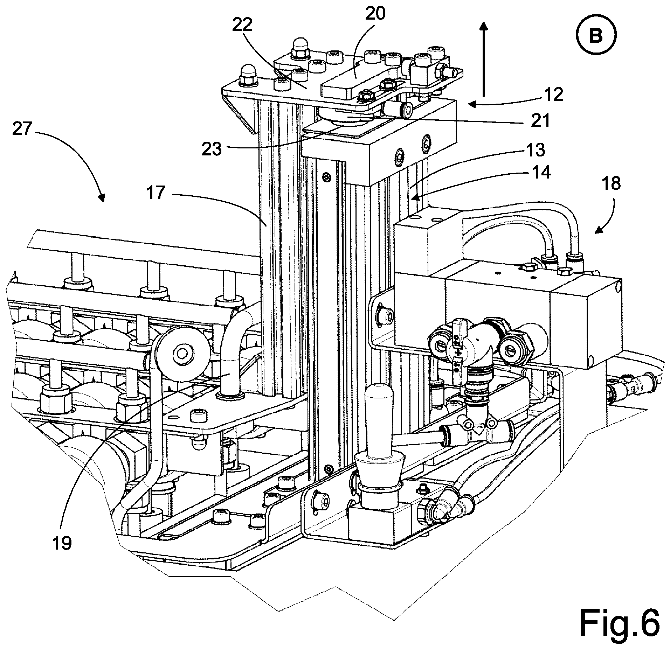

Die **Fig.** 6 zeigt das Detail **B** im Bereich des rechten Hubzylinders **13.** Zu erkennen ist ein rechter Anschlag **20,** der den Hub des Spannmoduls **21** begrenzt und für eine Führung des Hubkolben **14** sorgt. Auf dieser Seite ist das Spannmodul **21** ausgefahren, sodass es die Probenvorrichtung **27** entsprechend anhebt (Pfeil). Zur Erzeugung des Hubs weist das Spannmodul **21** eine Membran **23** auf, die pneumatisch auslenkbar ist. Bei Entlastung entspannt sich die Membran **23** und der Hub des Spannmoduls **21** fällt zurück. Entsprechend fällt auch die Probenvorrichtung **27** zurück. Bei einem alternierenden Betätigen der beiden Spannmodule **21** in Form der Auslenkung der Membranen **23** wird die Probenvorrichtung **27** abwechselnd links und rechts angehoben (und fällt bei Entlastung der Membranen **23** entsprechend zurück), sodass sie eine Pendelbewegung ausführt. Diese ist dynamisch und kann eine relativ hohe Frequenz haben, die einstellbar ist.

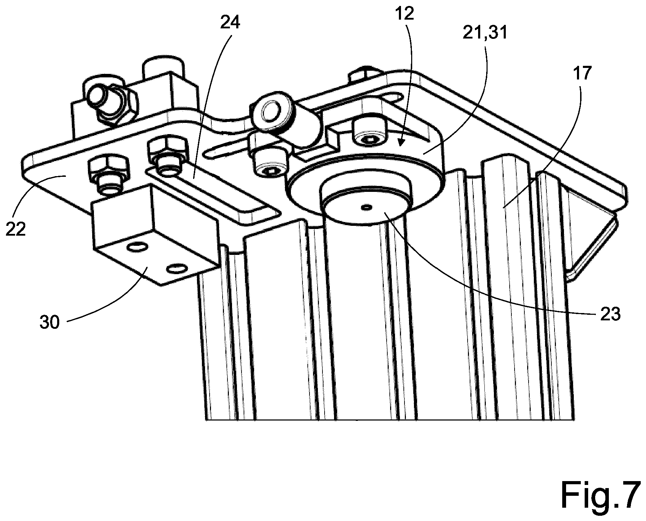

Die **Fig.** 7 zeigt im Detail das Spannmodul **21** als Hubelement **31** von unten in gespannter Position (die Probenvorrichtung **27** ist angehoben). Die Membran **23** ist ausgelenkt. Weiterhin ist ein Führungsschlitz **24** zu erkennen, in dem der Anschlag **20** läuft. Außerdem ist ein Auflageblock **30** dargestellt, der als Auflagefläche für die an der Portalstütze **17** befestigten Platte **22** auf dem Hubkolben **14** dient, wenn das Spannmodul **21** entlastet ist.

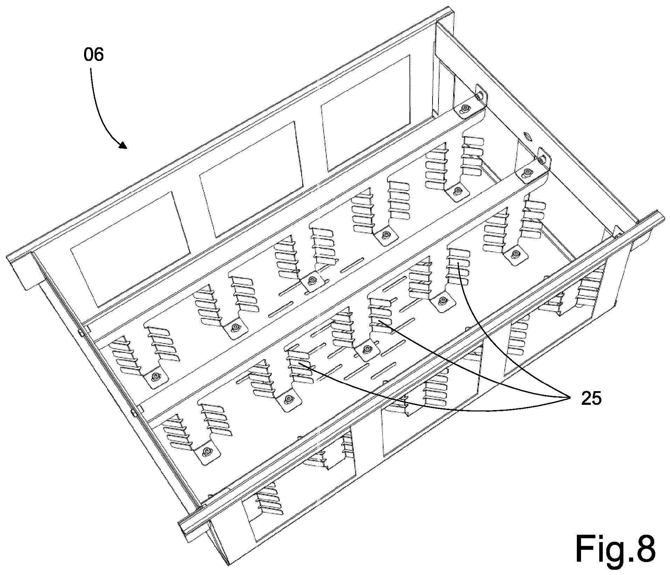

In der Fig. 8 ist der Einsatzkorb **06** im Detail gezeigt. Er weist Verwirbelungselemente **25** auf, die bei einer Schüttelbewegung des Einsatzkorbes **06** dafür sorgen, dass das Wasser **07** in der Wanne **05** verwirbelt wird, sodass dessen gleichmäßige Temperierung gewährleistet ist. Die relativ kleine, nahezu vertikale Pendelbewegung der Probengefäße **03** reicht zwar für eine gute Durchmischung der Proben **10** vollständig aus, in der Regel aber nicht für eine ausreichende Verwirbelung des Wassers **07** in der Wanne **05.** Daher sind die zusätzlichen Verwirbelungselemente **25** am Einsatzkorb **06** vorgesehen. Da die Verwirbelungselemente **25** nicht an der Wanne **05** selbst vorgesehen sind, können herkömmliche Wasserbäder mit integrierter Schüttelvorrichtung **08** oder externer Schüttelvorrichtung (die nur auf den Einsatzkorb **06** zugreift) bei der Erfindung verwendet werden. Somit leistet die Erfindung einen wertvollen Beitrag für eine bessere Handhabung der Probenaufbereitungseinrichtung **01** bei gleichzeitig kommerziell angemessener konstruktiver Umsetzung.

### Bezugszeichenliste

- **01**: Probenaufbereitungseinrichtung
- **02**: Ventilblock
- **03**: Probengefäß
- **04**: Wasserbad
- **05**: Wanne
- **06**: Einsatzkorb
- **07**: Wasser
- **08**: Schüttelvorrichtung
- **09**: Exzenterantrieb
- **10**: Probe
- **11**: erste Hubvorrichtung
- **12**: zweite Hubvorrichtung
- **13**: Hubzylinder
- **14**: Hubkolben
- **15**: Schmalseite von 05
- **16**: Hubtisch
- **17**: Portalstütze
- **18**: Steuervorrichtung
- **19**: Griff
- **20**: Anschlag
- **21**: Spannmodul
- **22**: Platte
- **23**: Membran
- **24**: Führungsschlitz
- **25**: Verwirbelungselement
- **26**: Oszillierventil
- **27**: Probenvorrichtung
- **28**: Gehäuse von 04
- **29**: pneumatisches Steuerventil
- **30**: Auflageblock
- **31**: Hubelement

## Patentansprüche

1. Probenaufbereitungseinrichtung (01) mit einem Wasserbad (04), aufweisend ein Gehäuse (28), eine Wanne (05) und einen darin befindlichen Einsatzkorb (06), wobei in die Wanne (05) Wasser (07) einbringbar und temperierbar ist, mit einer Schüttelvorrichtung (08), die mit der Wanne (05) oder dem Einsatzkorb (06) verbunden ist, und mit einer Probenvorrichtung (27) mit mehreren austauschbaren Probengefäßen (03), die in das Wasser (07) in der Wanne (05) eintauchbar sind, wobei die Probenvorrichtung (27) ebenfalls schüttelbar ausgebildet ist,
**dadurch gekennzeichnet, dass**
eine erste Hubvorrichtung (11), die zwei zueinander beabstandete Hubzylinder (13) mit darin geführten Hubkolben (14) aufweist, wobei die Hubzylinder (13) mit dem Gehäuse (28) des Wasserbades (04) und die Hubkolben (14) mit der Probenvorrichtung (27) verbunden sind, und eine zweite Hubvorrichtung (12), die zwei Hubelemente (31) aufweist, wobei diese zwischen den Hubkolben (14) und der Probenvorrichtung (27) angeordnet sind, vorgesehen sind; dass eine Steuervorrichtung (18) vorgesehen ist, mittels der die beiden Hubkolben (14) gleichzeitig und die beiden Hubelemente (31) alternierend betätigbar sind; und dass im Einsatzkorb (06) Verwirbelungselemente (25) für das Wasser (07) vorgesehen sind.

2. Probenaufbereitungseinrichtung (01) nach Anspruch 1,
**dadurch gekennzeichnet, dass**
die Steuervorrichtung (18) pneumatisch angetrieben ist und für die erste Hubvorrichtung (11) ein Steuerventil (29) und für die zweite Hubvorrichtung (12) ein Oszillierventil (26) umfasst.

3. Probenaufbereitungseinrichtung (01) nach Anspruch 1 oder 2,
**dadurch gekennzeichnet, dass**
an der Probenvorrichtung (27) Portalstützen (17) angeordnet sind, die über die Hubelemente (31) mit den Hubkolben (14) verbunden sind.

4. Probenaufbereitungseinrichtung (01) nach einem der vorangehenden Ansprüche,
**dadurch gekennzeichnet, dass**
die beiden Hubelemente (31) als pneumatisch betätigbare Spannmodule (21) ausgebildet sind.

5. Probenaufbereitungseinrichtung (01) nach einem der vorangehenden Ansprüche,
**dadurch gekennzeichnet, dass**
die Probenvorrichtung (27) als Equilibriereinheit für die Isotopenmessung ausgebildet ist.

## Claims

1. Sample preparation device (01) with a water bath (04), having a housing (28), a tank (05), and an insert basket (06) located therein, wherein water (07) can be introduced into the tank (05) and the water temperature can be controlled, with a shaking apparatus (08) that is connected to the tank (05) or the insert basket (06), and with a sampling apparatus (27) having multiple replaceable sample containers (03), which can be immersed in the water (07) in the tank (05), wherein the sampling apparatus (27) is also constructed in such manner as to be shakeable,
**characterized in that**
a first lifting apparatus (11) equipped with two separately positioned lifting cylinders (13) which have pistons (14) arranged therein, wherein the lifting cylinders (13) are connected to the housing (28) of the water bath (04), and the pistons (14) are connected to the sampling apparatus (27), and a second lifting apparatus (12) equipped with two lifting elements (31), said elements being arranged between the pistons (14) and the sampling apparatus (27), are provided;
that a control apparatus (18) is provided, by means of which the two pistons (14) can be actuated simultaneously and the two lifting elements (31) alternatingly;
and that swirling elements (25) for the water (07) are provided in the insert basket (06).

2. Sample preparation device (01) according to Claim 1, **characterized in that**
the control apparatus (18) is driven pneumatically and includes a control valve (29) for the first lifting apparatus (11) and an oscillating valve (26) for the second lifting apparatus (12).

3. Sample preparation device (01) according to Claim 1 or 2,
**characterized in that**
pillar supports (17) are arranged on the sampling apparatus (27) and are connected to the pistons (14) via the lifting elements (31).

4. Sample preparation device (01) according to any one of the preceding claims,
**characterized in that**
both lifting elements (31) are constructed as pneumatically operable clamping modules (21).

5. Sample preparation device (01) according to any one of the preceding claims,
**characterized in that**
the sampling apparatus (27) is embodied as am equilibration unit for isotope measurement.

## Revendications

1. Dispositif de préparation des échantillons (01) avec un bain d'eau (04), comportant un carter (28), une cuve (05) et un panier insérable (06) se trouvant dans celle-ci, de l'eau (07) pouvant être introduite dans la cuve (05) et tempérée, pourvu d'un dispositif agitateur (08), qui est relié avec la cuve (05) ou le panier insérable (06) et pourvu d'un dispositif d'échantillonnage (27), comprenant plusieurs récipients d'échantillonnage (03) interchangeables, qui peuvent être immergés dans l'eau (07) dans la cuve (05), le dispositif d'échantillonnage (27) étant également conçu de manière à pouvoir être agité,
**caractérisé**
**en ce que** sont prévus un premier dispositif de levage (11), qui comporte deux vérins de levage (13) écartés l'un de l'autre, doté de deux pistons de levage (14) guidés dans celui-ci, les vérins de levage (13) étant reliés avec le carter (28) du bain d'eau (04) et les pistons de levage (14) étant reliés avec le dispositif d'échantillonnage (27) et un deuxième dispositif de levage (12), qui comporte deux éléments de levage (31), ceux-ci étant placés entre les pistons de levage (14) et le dispositif d'échantillonnage (27) ; en ce qu'il est prévu un dispositif de commande (18), au moyen duquel les deux pistons de levage (14) sont actionnables simultanément et les deux éléments de levage (31) sont actionnables alternativement ; et en ce que dans le panier insérable (06) sont prévus des éléments tourbillonnaires (25) pour l'eau (07).

2. Dispositif de préparation des échantillons (01) selon la revendication 1,
**caractérisé**
**en ce que** le dispositif de commande (18) est entraîné par moyen pneumatique et comprend pour le premier dispositif de levage (11) une vanne de commande (29) et pour le deuxième dispositif de levage (12) une vanne d'oscillation (26).

3. Dispositif de préparation des échantillons (01) selon la revendication 1 ou 2,
**caractérisé**
**en ce que** sur le dispositif d'échantillonnage (27) sont placés des supports de portique (17), qui par l'intermédiaire des éléments de levage (31) sont reliés avec les pistons de levage (14).

4. Dispositif de préparation des échantillons (01) selon l'une quelconque des revendications précédentes,
**caractérisé**
**en ce que** les deux éléments de levage (31) sont conçus sous la forme de modules de serrage (21) actionnables par moyen pneumatique.

5. Dispositif de préparation des échantillons (01) selon l'une quelconque des revendications précédentes,
**caractérisé**
**en ce que** le dispositif d'échantillonnage (27) est conçu sous la forme d'une unité d'équilibrage pour la mesure isotopique.
